# EUROPÄISCHE PATENTSCHRIFT

(11) **EP 1 667 074 B1**
(45) Veröffentlichungstag und Bekanntmachung des Hinweises auf die Patenterteilung: **30.10.2019**
(21) Anmeldenummer: 04028569.4
(22) Anmeldetag: 02.12.2004
(51) Int. Cl.: G07F 7/08, G07B 15/02, G07F 7/00

(54) **Verfahren zur automatisierten Erfassung der Benutzung kostenpflichtiger Transportmittel und zur Abrechnung des Fahrpreises**
Method for automatically recording the use of fee-based vehicles and for deducting the fees
Méthode automatique de détecter l'utilisation des vehicules payants et de facturer le prix du voyage

(43) Veröffentlichungstag der Anmeldung: 07.06.2006
(60) Teilanmeldung: 19155251.2
(73) Patentinhaber: mcity GmbH, 41238 Mönchengladbach (DE)
(72) Erfinder: Stoffelsma, Bouke C., 41239 Mönchengladbach (DE); Feiter, Manfred, 41238 Mönchengladbach (DE)
(74) Vertreter: Rausch Wanischeck-Bergmann Brinkmann

(56) Entgegenhaltungen:
- EP-A- 1 089 237
- WO-A-02/056237
- CH-A- 693 835
- US-A1- 2003 164 399

## Beschreibung

Die vorliegende Erfindung betrifft ein Verfahren zur automatisierten Erfassung der Benutzung kostenpflichtiger Transportmittel und zur Abrechnung des Fahrpreises.

Bislang wird die Benutzung kostenpflichtiger Transportmittel, insbesondere des öffentlichen Personenverkehrs, überwiegend in Form von auf Papier gedruckten Fahrkarten abgewickelt. Diese Fahrkarten sind jedoch umständlich in der Handhabung und relativ einfach zu fälschen. Aus dem Stand der Technik sind darüber hinaus Fahrkartensysteme bekannt, die auf so enannten Smartcards basieren. Dieses können sowohl kontaktbehaftete Karten (klassische Chipkarten) als auch kontaktlose Karten (Transponderkarten) als auch Mischformen (Dual-Interface-Karten) sein. Diese Smartcards enthalten für die Fahrausweiserhebung relevante Daten (Fahrausweisdaten und/oder Tarifdaten).

Die Verarbeitung der Smartcards im Rahmen der Fahrpreiserhebung (Schreib-Lesevorgänge an Automaten, Durchgangssperren, Kontrollgeräten, personenbesetzten Verkaufsstellen und anderen Stellen des öffentlichen Personenverkehrs) erfolgt über eine entsprechende echnische Ticketing-Infrastruktur der jeweiligen Verkehrsbetriebe. Es kommt zu einem erheblichen Aufkommen an Kommunikationssignalen im Bereich der Geräte, welche ihrerseits wiederum mit Zentraleinheiten zu Zwecken der Tarifgestaltung, Nutzungsauswertung und dergleichen in Verbindung stehen müssen.

Bei Systemen, bei welchem der Öffentliche Nahverkehr überwiegend mit Hilfe von Fahrscheinen aus Papier abgewickelt wird, die vor Fahrtantritt für eine festzulegende Strecke gekauft oder entwertet werden müssen, muß der Fahrgast die gekaufte Strecke fahren oder den Fahrschein ganz oder teilweise verfallen lassen. Ein Kontrolleur kann durch bloßes Ansehen des Fahrscheins prüfen, ob der Fahrschein für die befahrene Strecke Gültigkeit besitzt.

Seit mehreren Jahren gibt es im Stand der Technik unterschiedliche Verfahren, den Fahrschein aus Papier durch ein elektronisches Ticket zu ersetzen. Die Verfahren ermöglichen eine automatische Ermittlung und Abrechnung des Fahrpreises.

Aus dem Stand der Technik sind folgende Verfahren bekannt, die eine bequemere Abrechnung ermöglichen sollen:
Der Rhein-Main-Verkehrsverbund betreibt in Hanau probeweise ein so genanntes "Check-In/Check-Out"-System, bei dem der Fahrgast sich mit Hilfe einer Chipkarte beim Ein- und Aussteigen an einem Terminal im Fahrzeug identifiziert. Ein Hintergrundsystem errechnet, welche Strecken der Kunde tatsächlich gefahren ist und bucht die ermittelten Fahrpreise auf ein mit der Chipkarte verknüpftes Konto.

Aus der PCT-Anmeldung NL01/00215 ist ein Verfahren bekannt, bei dem der Fahrgast ein mobiles Gerät (zum Beispiel ein Mobiltelefon oder einen Transponder) mit einer ihm zugeordneten Nummer benutzt, um automatisch identifiziert zu werden, wenn er sich in einem Fahrzeug des öffentlichen Nahverkehrs aufhält. Das Fahrzeug registriert wo der Fahrgast das Fahrzeug betritt, und wo er das Fahrzeug verlässt. I.d.R. werden diese Daten an ein Hintergrundsystem übermittelt, das auf Basis dieser Daten den Fahrpreis für die zurückgelegte Strecke ermittelt. Solche Systeme werden oft als "Be In/Be Out"-Systeme bezeichnet.

Aus der DE 199 57 660 ist ein Verfahren zur Abrechnung des Fahrpreises bei der Benutzung öffentlicher Verkehrsmittel bekannt, bei welchem ein vom Benutzer mitgeführter scheckkartenähnlicher Speicher mit einem Guthaben belegt ist. Während der Nutzung öffentlicher Verkehrsmittel werden von dem Verkehrsmittel Zählimpulse ausgesandt und bei jedem empfangenen Zählimpuls von dem auf der Speichereinheit abgespeicherten Guthaben ein Betrag abgebucht. Aus diesem Grunde muß die Speichereinheit praktisch ununterbrochen aktiv sein, was den Energieverbrauch erheblich erhöht. Darüber hinaus ist die Anpassung an Tarifsysteme, Gruppensysteme und dergleichen praktisch nicht möglich. Schlußendlich ist noch vorgesehen, daß am Fahrzeug eine Erkennungsvorrichtung ausgebildet ist, die Codierungen der einzelnen Fahrberechtigungsausweise erkennt und verwertet. Es findet also ein bidirektionaler Informationsaustausch statt.

Aus der Schweiz ist ein Pilotprojekt "easyride" bekannt, bei dem der Kunde eine Transponder-Karte bei sich führt, die beim Benutzen eines Fahrzeugs eine Anmeldung im Fahrzeug vornimmt und dies regelmäßig wiederholt. Die Kommunikation zwischen dem Fahrzeug und der Transponder-Karte ist dabei bidirektional und nimmt in der Komplexität zu, je mehr Fahrgäste sich im Fahrzeug befinden. Dennoch war der Komfort für den Kunden bereits gut.

Solche Be-In/Be-Out Systeme sind bisher jedoch sehr teuer und technisch anfällig. Auch ist ein immer wieder auftretendes Problem der hohe Energiebedarf des Transpondermediums. Aber insbesondere für den Betreiber ist nunmehr die Kontrolle von Fahrscheinen schwierig. Man kann dem elektronischen Fahrschein nämlich nicht mehr ansehen, ob er für die Fahrtstrecke gültig ist oder nicht. Um den elektronischen Fahrschein auf Gültigkeit zu prüfen, muss der Kontrolleur zunächst den Fahrschein auslesen und dann die Daten mit den Angaben im Hintergrundsystem abgleichen. Selbst optimierte Kontrollgeräte erreichen in der Praxis derzeit eine Kontrollzeit von etwa sechs Sekunden pro Fahrschein. Gerade im Vergleich mit der einfachen und schnelle n Kontrollmöglichkeit des Papier-Fahrscheins erweisen sich solche Systeme in der Praxis als langsam und nicht robust.

Check-In/Check-Out Systeme haben den Nachteil, daß sie für Massenanwendungen i.d.R. nicht geeignet sind: man stelle sich eine volle U-Bahn zur Hauptverkehrszeit vor, bei der jeder Fahrgast beim oder kurz vor dem Erreichen der Ziel-Haltestelle zunächst an ein Terminal in der U-Bahn herantreten muss, um einen Check-Out vorzunehmen. Dies ist faktisch nur in geschlossenen Systemen mit Drehgittern an jeder Haltestelle praktisch wie beispielsweise der U-Bahn in London. Für offene Systeme wie in Deutschland üblich ist dies eher unpraktisch. Für Inhaber von Monatskarten erweist sich zudem der zusätzliche Aufwand für Check-In und Check-Out als Verschlechterung zum Fahrschein auf Papier.

Die vorliegende Erfindung zielt darauf ab, ein Verfahren zur automatisierten Erfassung der Benutzung kostenpflichtiger Transportmittel und zur Abrechnung des Fahrpreises bereitzustellen, das einfach zu handhaben, kundenfreundlich, beständig gegen Betrugsversuche und flexibel bezüglich der Tariffestlegung ist.

Das erfindungsgemäße Verfahren ist durch die Merkmale im Patentanspruch 1 gekennzeichnet. Mindestens ein im Bereich des Transportmittels angeordneter sender im Sinne einer unidirektionalen Kommunikation Datentelegramme aus, die von einem Endgerät des das Transportmittel nutzenden Nutzers empfangen und weiterverarbeitet werden.

Der besondere Vorteil dieses Verfahrens liegt darin, daß die Kommunikation ausschließlich von dem im Bereich des Transportmittels angeordneten Sender in Richtung des Nutzerendgerätes erfolgt. Durch dieses sogenannte Broadcast-Verfahren werden Kollisionen vermieden, die auftreten können, wenn mehrere Endgeräte gleichzeitig Daten versenden. In diesem Fall müßten größere Frequenzbereiche reserviert werden, damit eine große Anzahl Endgeräte störungsfrei senden kann. Insbesondere an großen Verkehrsknotenpunkten ist dies nicht zu realisieren. Eine weitere Alternative wäre, ein Protokoll zu verwenden, mit dem die Aufsendungen der Endgeräte koordiniert werden. Eine solche Implementierung ist jedoch aufwendig und äußerst fehleranfällig. Außerdem benötigt dabei der im Bereich des Transportmittels angeordnete Sender eine Kommunikationsverbindung zu einer zentralen Rechnereinheit zur Weiterleitung der empfangenen Daten, was ebenfalls mit Aufwand und Kosten verbunden ist.

Ausgangspunkt ist, daß der Fahrgast eine elektronische Vorrichtung (Endgerät) hat, die über einen Speicher verfügt, der mit mindestens einem Empfänger, einem Display und einer Verarbeitungseinheit verbunden ist. Es wird dann ein Verfahren durchgeführt, bei dem die folgenden Schritte erfolgen:
- Einmaliges Empfangen und Speichern der vom Fahrzeug gesendeten Daten,
- Empfangen und Speichern weiterer vom Fahrzeug gesendeter Daten,
- Weiterverarbeitung der empfangenen Daten unter Berücksichtigung von auf dem Endgerät befindlichen Daten und Algorithmen
- in Abhängigkeit vom Ergebnis der Verarbeitung Abbuchen von Wert- oder Geldeinheiten aus dem Speicher des Endgeräts und
- in Abhängigkeit vom Ergebnis der Verarbeitung Anzeige tarif- und nutzungsrelevanter Informationen auf dem Display des Endgeräts.

Wobei das Senden der Daten vom Fahrzeug vorzugsweise mit Hilfe eines einfach empfangbaren Funksenders (Transponder, WLAN, Bluetooth oder andere) mit begrenzter Reichweite erfolgt. Die Sender sind dabei vorzugsweise gegen Störungen unempfindlich; dazu eignen sich insbesondere sog. Frequency-Hopping-Technologien oder ähnliches. Ein Rücklesen des gesendeten Codes ermöglicht die kontinuierliche Funktionskontrolle im Fahrzeug.

Das Nutzerendgerät, das auch als elektronisches Ticket oder E-Ticket bezeichnet wird, empfängt die vom Sender ausgesendeten Datentelegramme und verarbeitet diese weiter. Diese Weiterverarbeitung kann darauf beschränkt sein, die empfangenen Daten unverändert zu speichern.

Gemäß der Erfindung werden im Nutzerendgerät nach Auswertung des empfangenen Datentelegramms Einheiten von einem vorbezahlten Guthaben abgebucht. Dieses Guthaben kann beispielsweise bei der Übernahme des Endgerätes oder zu jedem beliebigen Zeitpunkt an dafür vorgesehenen Stellen aufgeladen werden. Der zu zahlende Fahrpreis kann beispielsweise linear entfernungsabhängig sein oder sich an einer beliebig anderen Tarifsystematik errechnen.

In vorteilhafter Weise zeigt das Endgerät an, welcher Abrechnungsmodus aktiv ist. Dies kann, zusammen mit der Ticketgültigkeit, vom Nutzer wie von einem Kontrolleur überprüft werden.

In vorteilhafter Weise enthalten die vom im Transportmittel angeordneten Sender ausgesendeten Datentelegramme mindestens eine Information aus der Menge Firmen-ID, Sequenznummer, Datum, Uhrzeit und Standortinformation. Die Firmen-ID dient der Identifikation des die Transportleistung bereitstellenden Unternehmers, wodurch beispielsweise die Aufteilung von Einnahmen auf die verschiedenen Unternehmer in einem Verkehrsverbund ermöglicht wird. Anhand der Sequenznummer kann das Datentelegramm eindeutig identifiziert werden. Mit Hilfe von Datum und Uhrzeit kann der Zeitpunkt der Nutzung des Transportmittels bestimmt werden. Die Standortinformation dient dazu, den räumlichen Verlauf des Transports nachzuvollziehen. Anhand der in gedem Fall üdermittelden Fahrzeugidentifikation kann festgestellt werden, welches Transportmittel benutzt wird. Selbstverständlich können die Datentelegramme auch weitere, hier nicht aufgeführte Informationen enthalten.

Diese Informationen bezieht der Sender in vorteilhafter Weise von einem ohnehin im Transportmittel vorhandenen Rechner, zum Beispiel einem RBL-Bordrechner oder einem IBIS-Steuergerät. Die Übertragung kann über einen IBIS-Wagen-Bus, Ethernet LAN oder sonstige Kanäle erfolgen.

Die vom Fahrzeug gesendeten Daten (Code) sind dabei qualifiziert. Je nachdem, welche Art von Tarifmodell unterstützt werden soll, enthält der Code zumindest einen Zählerstand. Aus der Veränderung / Fortschreibung des Codes kann die Verarbeitungseinheit (V) ermitteln, welche Strecken bei der Nutzung des Fahrzeugs zurückgelegt wurden und welche Gebühren sich daraus für den Fahrgast ergeben. Steigt der Fahrgast beispielsweise an einer Haltestelle (A) ein, und steht ein Zäh er des Fahrzeugs auf 100 kann dieser Zählerstand nunmehr regelmäßig vom Fahrzeug ausgesendet werden, ohne daß dadurch die Verarbeitungseinheit die gespeicherten Wert- oder Geldeinheiten vermindert. Erst wenn das Fahrzeug fährt, wird der Zähler des Fahrzeugs inkrementiert. So kann beispielsweise an der Haltestelle (B) der Zählerstand 103 betragen und an Haltestelle (C) entsprechend 110. Die Verarbeitungseinheit erhält vom Empfänger (E) jeweils die veränderten Codes, aus denen der Zählerstand ermittelt werden kann. Hat sich der Zählerstand verändert, können während der Fahrt entsprechende Wert- oder Geldeinheiten abgebucht und dem Fahrgast auf dem Display ein verbleibendes Kontingent oder Guthaben angezeigt werden.

Weit verbreitet sind jedoch auch Tarife, die einen festgelegten Preis für jede mögliche Wegstrecke von A nach B vorgeben. Und zwar oft in Abhängigkeit von Zonen, Waben oder anderen übergeordneten Verwaltungseinheiten. Bei solchen Tarifmodellen ist es mit dem erfindungsgemäßen Verfahren möglich, Informationen über die aktuelle Haltestelle und gegebenenfa Is die aktuel e Zone, Wabe etc. zu senden. Nun kann das Endgerät selbständig z.B. anhand von Tabellen errechnen, welcher Fahrpreis für die bisher zurückgelegte Strecke zu entrichten ist. Diese können im Endgerät enthalten sein oder ebenfalls im gesendeten Code enthalten sein. Die letztgenannte Variante könnte beispielsweise an jeder Haltestelle die bis dahin angefallenen Preise bzw. Preisstufen für alle möglichen Einstiegshaltestellen senden, wovon das Endgerät nur die für seine Einstiegshaltestelle gültige Information auswertet. Abbuchungen des Fahrpreises können dabei jeweils an jeder Haltestelle vorgenommen werden, und zwar als D fferenzabbuchung zur Abbuchung an der vorhergehenden Haltestelle. Fährt ein Fahrgast beispielsweise 5 Haltestellen, so ist es denkbar, ihm beim Erreichen der ersten Haltestelle den Preis für eine "Kurzstrecke" abzubuchen und im weiteren Fahrtverlauf erst beim Erreichen der 4. Haltestelle zusätzlich die Differenz zwischen einer "Kurzstrecke" und einer "Einzelfahrt" abzubuchen.

Ein besonderes Problem ergibt sich aus Tarifregelungen wie beispielsweise beim Rhein-Main-Verkehrsverbund oder dem Verkehrsverbund Rhein-Ruhr üblich, daß ein Ticket "nur zu Fahrten in Richtung auf das Ziel" genutzt werden darf. Bei Papierbasierten Fahrscheinen ist der Fahrgast dafür Verantwortlich, für die Rückfahrt einen neuen Fahrschein zu kaufen. Ein automatisiertes Fahrscheinsystem muss dies zuverlässig automatisch erledigen. An einem konkreten Beispiel wird das Problem deutlich:
Fährt man im Rhein-Main-Gebiet von Niedern hausen nach Königstein, so muss man zunächst mit einem Zug nach Höchst fahren, dort umsteigen und mit einem Zug in fast entgegengesetzter Richtung nach Niedernhausen weiterfahren. Rein geografisch legt man damit eine Strecke eines spitzen Dreiecks zurück: der Fahrgast fährt also einen ziemlich großen Umweg zu seinem Ziel und nähert sich dann bereits wieder dem Einstiegsbahnhof, Tariflich handelt es sich aber noch um eine Richtung.

Die Erfindung kann dieses Problem lösen. Dazu werden an jeder Haltestelle Informationen über die "Fahrtrichtung" in den Code eingefügt. Beim Einstieg speichert das Endgerät also die Einstiegshaltestelle und beim Erreichen der nächsten Haltestelle kann nun zusätzlich die Fahrtrichtung festgelegt werden, die nun für die gesamte weitere Fahrt gilt. An jeder Haltestelle sendet das Fahrzeug zu jeder möglichen Einstiegshaltestelle Informationen, in welcher Richtung die Haltestelle aus Sicht der Einstiegshaltestelle durchfahren wird. Sobald ein Fahrgast nun eine Haltestelle erreicht, deren Richtungsinformation nicht mit der zu Fahrtbeginn ermittelten Richtung übereinstimmt, kann das aktuelle Ticket abgeschlossen und gebucht werden und ein neues Ticket wird errechnet mit der aktuellen Haltestelle als neue Einstiegshaltestel e.

Codes können dabei in Abhängigkeit von allen denkbaren preisrelevanten Parametern gebildet werden, wie der zurückgelegten Fahrtstrecke, Datum und Uhrzeit um etwa Haupt- und Nebenzeiten zu unterscheiden, Art des Fahrzeugs um etwa unterschiedliche Preise für Busse, Bahnen und Taxis zu ermöglichen, befahrene Zonen, Fahrtrichtung, Wetter, Pünktlichkeit des Fahrzeugs um nur einige zu nennen. De gesendete Code enfhält eine Kennung des Fahrzeugs, um Sicherzustellen, daß bei einem Fahrzeugwechsel die Zählerstände auseinander gehalten werden können und damit eine korrekte Abbuchung von Wert oder Geldeinheiten gewährleistet wird.

Sinnvollerweise enthält der vom Fahrzeug gesendete Code auch einen oder mehrere weitere Informationen, wie zum Beispiel:
- eine Kennung des Betreibers um Sicherzustellen, daß die Wert- oder Geldeinheiten auch für den Betreiber Gültigkeit haben.
- Ein Gruppenkennzeichen und/oder Preisangaben, um beispielsweise unterschiedliche Tarifinformationen für Kinder und Erwachsene zu senden und damit für Kinder niedrigere Preise zu ermöglicher.
- Ein Prüfmerkmal für Fahrscheinkontrollen, beispielsweise eine Prüfzahl oder eine Kombination von Symbolen. Dieses Prüfmerkmal kann beispielsweise nur im Falle einer Fahrscheinkontrolle im Code entha ten sein und dann auf dem Display angezeigt werden. Damit wird dem Kontrolleur eine einfache Sichtkontrolle der Fahrscheine ermöglicht. Die Anzeige des Prüfmerkmals kann in einer besonders sicheren Ausführung des Verfahrens auch daran gebunden werden, daß zuvor mindestens ein bis auf den enthaltenen Zählerstand identischer Code ohne Prüfmerkmal empfangen wurde. Damit sind Fahrgäste, die bewusst den Empfang der Codes unterdrücken, ebenfalls leicht erkennbar, da das Display dann kein Prüfmerkmal anzeigt.
- Eine Uhrzeit mit oder ohne Datum, um Missbrauch dadurch auszuschließen, daß nur solche Codes verarbeitet werden, die eine aktuelle Zeit haben. So kann vermieden werden, daß Codes aufgezeichnet und erneut gesendet werden können. Zum Vergleich der Uhrzeit kann die Verarbeitungseinheit eine Zeitmessung vornehmen, die sich über die im Code enthaltenen Zeitangaben justiert.
- Statt oder zusätzlich zu einer Uhrzeit kann auch eine laufende Nummer enthalten sein, die ebenfalls ermöglicht, bereits empfangene Codes mit niedrigeren Nummern von der Verarbeitung auszuschließen.
- Werteinheiten, mit denen ein Speicher aufgebucht werden kann.

Das Verfahren ist dann besonders einfach umzusetzen, wenn die Aussendung der Codes zu festgelegten Zeiten, zum Beispiel alle 10 Sekunden, erfolgt. Dadurch können die Empfänger besonders Energie sparend ausgelegt werden, da sie in der Zwischenzeit abgeschaltet werden können.

Ein besonderer Aspekt betrifft die Aussendung der Datentelegramme die von bestimmten Ereignissen ausgelöst wird.

Gemäß eine Alternative finden die Ereignisse in einem festen zeitlichen Abstand statt. Dadurch wird sichergestellt, daß das Endgerät regelmäßig Datentelegramme empfängt.

Gemäß einer Ausgestaltungsform finden die Ereignisse nach einer durch das Transportmittel zurückgelegten Strecke statt. Somit läßt sich die Benutzung des Transportmittels mit einer vorgebbaren örtlichen Genauigkeit erfassen.

Weiterhin ist es möglich, daß die Ereignisse stattfinden, wenn sich das Transportmittel im Bereich einer Haltestelle befindet. Somit läßt sich die Aussendung von Datentelegrammen auf ein Minimum reduzieren, da die Haltestellen diskrete Streckenabschnitte def nieren, die eine kleinstmögliche Nutzungseinheit darstellen. Wird kein weiteres Datentelegramm empfangen, so ist davon auszugehen, daß der Benutzer das Transportmittel an der dem letzten empfangenen Datentelegramm zugehörigen Haltestelle verlassen hat. Zur genaueren Unterteilung kann vorgesehen sein, daß ein Datentelegramm bei Einfahrt in eine Haltestelle und ein Datentelegramm bei Ausfahrt aus der Haltestelle gesendet wird. Dadurch wird sichergestellt, daß das Endgerät des Nutzers an jeder Haltestelle mindestens ein Datentelegramm empfängt.

Gemäß einer weiteren Ausgestaltungsform finden die Ereignisse nach einem Zonen- und/oder Wabenwechsel statt. Ein solcher Wechsel kann für die Tarifermittlung und somit für die Gültigkeit des Tickets von Bedeutung sein, weshalb sich bei diesem Ereignis die Aussendung eines Datentelegramms anbietet.

Selbstverständlich ist es möglich, daß mehrere dieser Ereignisse die Aussendung eines Datentelegramms auslösen. Nicht nur in diesem Fall bietet es sich an, die Art des auslösenden Ereignisses im Datentelegramm zu vermerken.

In einer vorteilhaften Ausgestaltung der vorliegenden Erfindung generiert das Nutzerendgerät aus den empfangenen Datentelegrammen Datensätze über den Fahrtanfang und/oder das Fahrtende und speichert diese. So kann zur Abrechnung oder Analyse des Nutzungsverhaltens festgestellt werden, wann und wo ein Nutzer in ein Transportmittel zugestiegen ist oder dieses verlassen hat. Anhand dieser Daten lassen sich auch durch Umsteigen unterbrochene Fahrten als zusammengehörig erkennen.

Grundsätzlich können die Tarifinformationen auch auf dem Speicher des Nutzerendgerätes hinterlegt sein.

Das Verfahren zur automatisierten Erfassung der Benutzung kostenpflichtiger Transportmittel und zur Abrechnung des Fahrpreises beruht darauf, daß der Benutzer sein Endgerät während der gesamten Fahrtdauer eingeschaltet hat. Um zu verhindern, daß das Endgerät erst dann eingeschaltet wird, wenn eine Fahrkartenkontrolle durchgeführt wird, kann von dem im Transportmittel angeordneten Sender ein Datentelegramm ausgesendet werden, das das Nutzerendgerät in einen Kontrollmodus versetzt. Dieser Modus wird vom Endgerät angezeigt und kann nicht angenommen werden, wenn das Endgerät nach der Aussendung des entsprechenden Datentelegra mms eingeschaltet wurde.

Gemäß einer vorteilhaften Ausgestaltung der vorliegenden Erfindung kann das Endgerät durch den Kunden bewusst ausgeschaltet werden. So kann zum Beispiel ein Kunde mehrere Endgeräte gleichzeitig mitführen, ohne daß auf allen eine Abrechnung erfolgt, wenn diese ausgeschaltet sind. Dies kann zum Beispiel der Fall sein, wenn ein Vater die Endgeräte seinen Kinder mitführt, obwohl die Kinder nicht mit dem Vater unterwegs sind.

Selbstverständlich können auch andere Kontrollmechanismen, die durch die Aussendung eines speziellen Datentelegramms initiiert werden, verwendet werden, ohne den Grundgedanken dieser Erfindung zu verlassen.

Denkbare Empfänger bringen ein weiteres praktisches Problem mit sich: Sendet das Fahrzeug keine Information, kann dies vom Empfänger zunächst nicht erkannt werden, da die Empfänger dann willkürliche Informationen erkennen (Rauschen des Empfängers). Diese Eigenschaft zieht üblicherweise einen hohen Energiebedarf des Empfängers nach sich, da eine klassische Trägererkennung bei diesen Empfängern nicht möglich ist und die Empfänger deshalb kontinuierlich eingeschaltet bleiben müssen. Um weiterhin den Energiebedarf im Endgerät zu reduzieren, kann die Aussendung des Codes daher sehr redundant erfolgen. Werden die Codes nach einem festen Schema codiert, z.B. jedes Bit wird n-mal wiederholt, so kann ein Empfänger im Bruchteil einer Sekunde erkennen, ob das Signal vom Sender stammt, oder ob es sich um Rauschen handelt, wenn sich nämlich das Rausch-Signal schneller als nach "n" gleichen Elementen verändert. Dann kann der Empfänger sofort abgeschaltet werden und erst nach einer festgelegten Zeit (Ruhezeit) wieder eingeschaltet werden. Dieses Verfahren ist dann besonders effektiv, wenn die Dauer der Übermittlung des Codes länger ist als die Ruhezeit des Empfängers.

Um das Verfahren besonders robust auszugestalten, kann ein empfangener Code erst dann als gültig ausgewertet werden, wenn bestimmte Merkmale des Codes (z.B. die aktuelle Haltestelle) über einen längeren Streckenabschnitt mehrmals empfangen wurden. Damit werden mögliche Störungen durch Funksignale von entgegenkommenden Fahrzeugen vermieden.

Gemäß der Erfindung werden die Wert- oder Geldeinheiten nur abgebucht, wenn die Veränderung des Zählerstands einen festgelegten Schwellwert überschreitet. Damit kann sichergestellt werden, daß nicht etwa Codes empfangen werden, die von einem vorbeifahrenden Fahrzeug stammen, welches der Fahrgast gar nicht benutzt. In diesem Falle empfängt er zwar einen oder mehrere Codes, die enthaltenen Zähler haben sich aber aufgrund der geringen zurückgelegten Entfernung des Fahrzeugs kaum verändert und können somit ignoriert werden.

Besonders manipulationssicher ist das Verfahren, wenn der Code mit einem aus dem Stand der Technik bekanntem asymmetrischen Verschlüsselungsverfahren verschlüsselt wird, wobei der private Schlüssel zur Verschlüsselung des Codes und der öffentliche Schlüssel zum Entschlüsseln des Codes genutzt wird. Damit wird sichergestellt, daß nur autorisierte Stellen die preisrelevanten Codes bilden. Entsprechende Sicherheit kann auch unter Verwendung von symmetrischen Verschlüsselungsverfahren erzeugt werden. In diesem Falle werden die Schlüssel auf dem Endgerät geeignet sicher abgelegt.

Für Abonnenten ist weiterhin eine besonders vorteilhafte Ausführung des Verfahrens denkbar, bei dem vor einem Abbuchen von Geld-/oder Werteinheiten geprüft wird, ob die zurückgelegte Strecke in einer im Endgerät enthalten Liste aufgeführt ist und sofern Sie als im Abonnement enthalten erkennbar ist, nicht berechnet wird. So können Vielfahrer bestimmte Strecken pauschal, etwa monatlich bezahlen und nur noch die Gelegenheits-Fahrten über die im Endgerät enthaltenen Geld- oder Werteinheiten abrechnen.

Das Basisverfahren geht davon aus, daß ein fahrzeugeigener Sender gemäß einer vorgegebenen Regel Signale aussendet. Ein nutzerseitiges Endgerät enthält einen Empfänger, einen Speicher, eine Prozessoreinheit und ein Display. Das Endgerät ist möglichst klein und robust gebaut und kann von jedem Nutzer mitgeführt werden. Befindet sich ein Nutzer innerhalb des Fahrzeugs und damit im Bereich des fahrzeugseitigen Senders, empfängt das Endgerät die vom Fahrzeugsender gesandten Signale. In jedem Fall ist auf dem Speicher des Endgerätes ein einen Geldwert repräsentierender Wert gespeichert. Dieser kann als Guthaben auf dem Display angezeigt werden. In Abhängigkeit von dem jeweiligen Verfahren und der gesamten Codes kann nunmehr von dem gespeicherten Wert tarifrelevant abgebucht we den. Das Basissystem könnte somit im einfachsten theoretischen Fall so funktionieren, daß das Fahrzeug an jeder Haltestelle ein Signal abgibt und das Endegerät pro empfangenen Signal einen festen Wert abbucht.

In dem Endgerät können darüber hinaus Spezialinformationen hinterlegt sein, wie beispielsweise Sondertarifwerte für Kinder, Senioren und dergleichen, Transportbereichangaben, Streckenangaben oder beispielsweise Zeitangaben wie Monatskarten und dergleichen.

Grundsätzlich können Tarifinformationen vollständig auf dem Speicher des Endgerätes gespeichert sein und berücksichtigt werden, oder, für den Fall daß dies zuviele Informationen umfaßt, auch vom Sender im Code übermittelt werden.

Um auf einfachste Weise flexibel zu sein, kann das Endgerät über eine zusätzliche Schnittstelle, beispielsweise eine Infrarotschnittstelle verfügen und spezielle Informationen oder Modi abrufen. So kann beispielsweise ein einfaches Senderfeld im Fahrzeug verwendet werden, um einen Mehrpersonenmodus im Endgerät zu aktivieren, beispielsweise doppelte, dreifache oder mehrfache Abbuchungen oder dergleichen. Hier genügt ein einfaches Anhalten an ein entsprechend gekennzeichnetes Senderdisplay, um per Infrarot die Informationen zu erlangen.

Die Tarifinformationen können senderseitig so aufbereitet sein, daß für die aktuelle Haltestelle jeweils der zu entrichtende Fahrpreis in Bezug auf eine beliebige Einstiegshaltestelle, Einstiegszone oder dergleichen festgelegt und übermittelt wird. Das jeweilige Endgerät kann dann auf einfache Weise den gültigen Tarif entnehmen und abbuchen.

Zum Aufladen wird das Nutzerendgerät an sogenannten Ladeterminals geführt. Beispielsweise kann über die Infrarotschnittste le eine Identifikation erfolgen, aber auch über andere Schnittstellen berührungslos oder kontaktierend. Eine bar oder per Karte geleistete Einzahlung kann dann ebenfalls über Infrarot, Funk, USB oder dergleichen auf das Endgerät als Guthaben übermittelt werden. Dabei können Identifikationsverfahren und kryptografische Ve fahren eingesetzt werden.

Die Ladeterminals sind vorzugsweise online mit Ladeservern verbunden, so daß die Ladeterminals selbst keinerlei Informationen bereithalten, die beliebige Dritte beispielsweise ermitteln könnten.

Besonders flexibel wird das Endgerät, wenn es wie ausgeführt zusätzlich mit einem Infrarot-Empfänger ausgestattet ist. Über diesen Empfänger können sehr leicht spezielle Codes an das Endgerät gesendet werden, um Einstellungen im Speicher zu verändern. Beispielsweise ist es möglich, im Fahrzeug mehrere Felder mit jeweils einer einfachen Infrarot-Sendereinheit vorzusehen die kennzeichnet, mit wie viel Personen der Fahrgast gemeinsam reist. Ein nfrarot-Sender sendet kontinuierlich eine "1", ein zweiter Infrarot-Sender sendet kontinuierlich eine "2" usw. Durch einfaches "zeigen" auf ein Persoren-Symbol kann der Fahrgast nun seinem Endgerät mitteilen, daß die nachfolgenbe Fahrt für die entsprechende Anzahl Personen abgebucht werden soll. Statt eines Infrarot-Empfängers sind auch andere einfache Empfangsvorrichtungen denkbar z.B. ein Kontakt, eine weiter Funkschnittstelle, Ultraschallsensoren, ein Fotosensor u.a..

Für den Einsatz in Taxis oder in anderen Fahrzeugen, bei denen der Fahrpreis sehr genau dem einzelnen Betreiber zugeordr et werden muss, kann vorgesehen sein, daß das Endgerät unmittelbar mit dem Abbuchen auch jeweils ausgelesen wird und die ausgelesenen Informationen an ein Abrechnungssystem übergeben werden.

Es ist möglich, daß die im Nutzerendgerät gespeicherten Daten in zeitlichen Abständen gesammelt an eine zentrale Rechnereinheit übertragen werden. Dies kann beispielsweise erfolgen, wenn der Nutzer eine bestimmte Zone erreicht, beispielsweise den Zugang zu einer Haltestelle, oder wenn der Nutzer zu Abrechnungszwecken eine Verbindung zwischen seinem Endgerät und einer Rechnereinheit des Transportdienstleisters herstellt.

Generell ist das Auslesen der in den Speichern vorgehaltenen Transaktionsdaten auf verschiedenen Wegen möglich: Beim Wiederaufladen der Endgeräte mit neuen Werteinheiten oder über das Internet oder aber auch regelmäßig automatisch während der Fahrt an einen Datenspeicher im Fahrzeug.

Wirtschaftlich ist das Verfahren insbesondere dann, wenn die abzubuchenden Werteinheiten vom Fahrgast gegen Zahlung entsprechender Beträge auch wieder aufgeladen werden können. Das Verfahren sieht dabei vor, daß ein Hintergrundsystem die Zahlung erfasst und dann an das Endgerät neue Werteinheiten übermittelt. Der Zahlvorgang des Fahrgastes kann bar an einer Verkaufstelle oder bargeldlos über Automaten, ein Call-Center oder das Internet erfolgen. Die für das Endgerät erzeugten Werteinheiten können beispielsweise mit Hilfe von Ladeterminals an das Endgerät übermittelt werden. Denkbar ist auch, die ausgesendeten Codes des Fahrzeugs mit den für die Endgeräte vorgesehenen Werteinheiten zu versehen. Dazu ist es nötig, daß die Werteinheiten jeweils für ein Endgerät Gültigkeit besitzen und in jedem Fahrzeug ausgesendet werden.

Das Nutzerendgerätzeigt den aktuellen Ticketstatus an. Dadurch kann sowohl der Nutzer als auch ein Kontrolleur durch einfache Sichtung des Endgerätes feststellen, ob es sich um einen gültigen Fahrausweis handelt und der Nutzer über die Berechtigung zur Benutzung des Transportmittels verfügt.

Mit der Übergabe des Endgerätes an den Nutzer wird dieses initialisiert, beispielsweise durch Aufspielen von Ticketinformationen. Besteigt der Nutzer mit eingeschaltetem Endgerät ein Transportmittel, so empfängt das Endgerät ein erstes Datentelegramm, aus dem ein Datensatz über den Fahrtanfang generiert und gespeichert wird. Dieser Datensatz enthält neben dem Datum und der Uhrzeit auch die Identifikation des Fahrzeugs, so daß sowohl der Zeitpunkt als auch die in Anspruch genommene Transportleistung eindeutig identifiziert werden können. Während der Fahrt empfängt das Endgerät weitere Datentelegramme, bis daß der Nutzer den vom im Transportmittel angeordneten Sender abgedeckten Bereich verläßt und keine weiteren Datentelegramme mehr empfangen werden. Aus dem letzten empfangenen Datentelegramm generiert das Endgerät analog zu dem Vorgang bei Fahrtanfang einen Datensatz über das Fahrtende, der Datum, Uhrzeit sowie die Fahrzeugidentifikation enthält. Während der Fahrtdauer zeigt das Endgerät an, ob das darauf gespeicherte Ticket gültig ist. Sobald das Endgerät bei nächster Gelegenheit in kommunikationstechnischem Kontakt mit einer Rechnereinheit des Transportdienstleisters steht, werden die gespeicherten Daten an diese Rechnereinheit übertragen, beispielsweise um eine Analyse des Nutzungsverhaltens durchzuführen, zu kontrollieren und das Vertrauen des Kunden in das System zu verbessern.

Weitere Vorteile und Merkmale der Erfindung ergeben sich aus der folgenden Beschreibung anhand der Figuren. Dabei zeigen:
- Fig. 1: eine schematische Darstellung zur Erläuterung des Verfahrens;
- Fig. 2: eine Darstellung eines Ausführungsbeispiels für ein Nutzerendgerät und
- Fig. 3: eine schematische Darstellung zur Erläuterung des Verfahrens des Aufladens des Nutzerendgerätes.

In den Figuren sind gleiche Elemente mit gleichen Bezugszeichen versehen.

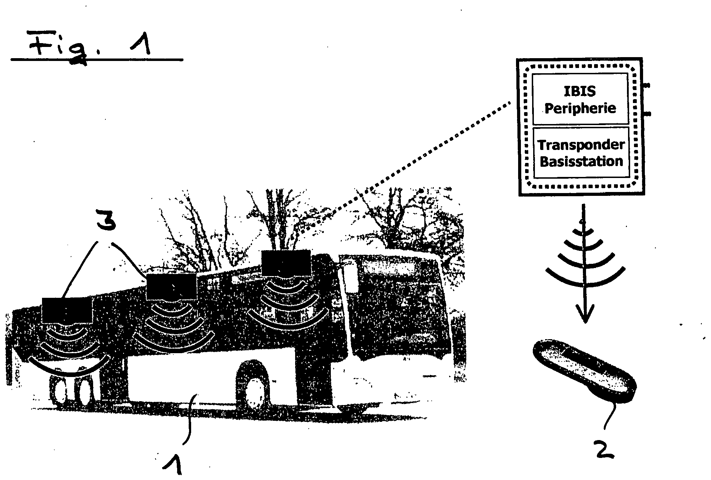

Gemäß Fig. 1 ist ein Bus 1 stellvertretend für öffentliche Verkehrsmittel wie Bahnen, Taxis und dergleichen gezeigt. Ein Nutzer mit einem Endgerät 2 befindet sich innerhalb des Busses 1. Die Sender 3 senden verfahrensabhängig, also zeitlich, distanzweise oder nach sonstigen Vorgaben Signale und/oder Codes aus. Details eines Senders mit IBIS Peripherie, Transponderbasisstation sowie entsprechenden Schnittstellen sind in dem Vergrößerungskasten gezeigt. Vom Nutzerendgerät 2 werden die Codes aufgenommen und verarbeitet.

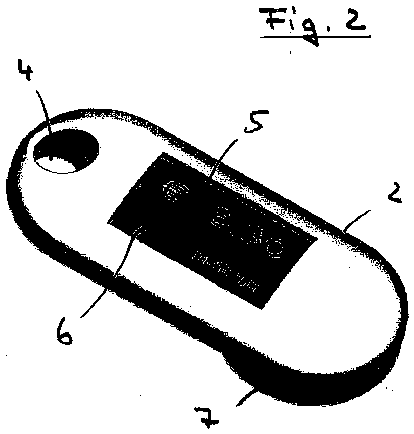

Gemäß Fig. 2 ist das Nutzerendgerät 2 aus einem ein- oder mehrteiligen Gehäuse gebildet, wobei im gezeigten Ausführungsbeispiel ein Loch 4 gezeigt ist. Damit kann das beispielsweise als elektronisches Ticket bezeichnete Nutzerendgerät an einem Schlüsselbund oder einem vergleichbaren Halteelement getragen werden. In dem Gehäuse ist ein Display 5 angeordnet, welches Betrags informationen anzeigen kann. Im Bereich der unteren Zeile 6 können Zusatzinformationen angezeigt werden, beispielsweise wenn eine Fahrt für mehrere Personen über dieses Ticket abgebucht wird, Haltestelleninformationen und dergleichen. Wie beschrieben ist in der Einheit 2 ein Prozessor, ein Speicher sowie im wesentlichen ein Empfänger, wobei der Verbreiterungsbereich 7 an einem Ende zur Aufnahme von Bauelementen dient.

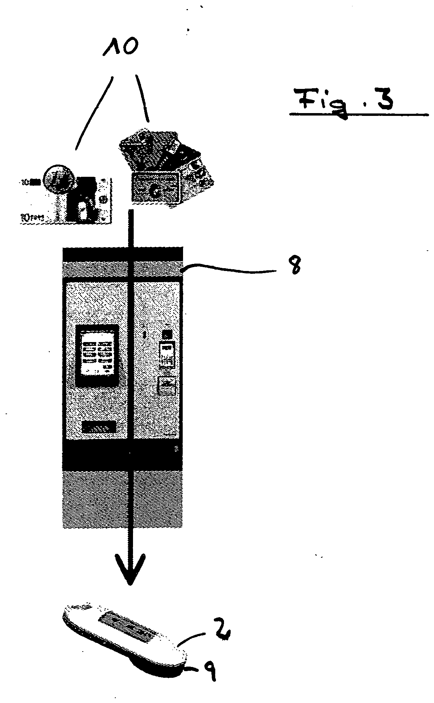

Gemäß Fig. 3 kann beispielsweise in diesem Bereich 7 ein Infrarotempfänger 9 angeordnet sein. An entsprechenden Stellen aufgestellte Ladeterminals 8 dienen dem Zweck, zunächst eine Identifizierungsprozedur mit dem Nutzerendgerät 2 durchzuführen. Anschließend kann der Nutzer Geldmittel 10 wie Bargeld, Scheckkarten und dergleichen einführen. Nach einem entsprechenden Protokoll oder auch unter Nutzung unterschiedlicher Schnittstellen kann dann das Terminal 8 auf das Endgerät 2 entsprechende Guthabenwerte übermitteln.

### Bezugszeichenliste

- 1: Bus
- 2: Nutzerendgerät / E-Ticket
- 3: Sender
- 4: Loch
- 5: Display
- 6: Displaybereich
- 7: Verbreiterung
- 8: Ladeterminal
- 9: IR-Schnittstelle
- 10: Geldmittel

## Patentansprüche

1. Verfahren zur automatisierten Erfassung der Benutzung kostenpflichtiger Transportmittel zur Personenbeförderung und zur Abrechnung des Fahrpreises, wobei mindestens ein im Bereich des Transportmittels angeordneter Sender unidirektional Datentelegramme aussendet, die von einem Endgerät des das Transportmittel nutzenden Nutzers empfangen und weiterverarbeitet werden, wobei die folgenden Schritte durchlaufen werden:
- Empfangen und Speichern eines von einem Sender gesendeten Datentelegramms, welches eine Standortinformation über den Standort des Senders und/oder Fahrpreis- oder Tarifinformationen enthält,
- Empfangen und Speichern mindestens eines weiteren von einem Sender gesendeten Datentelegramms,
- Weiterverarbeitung der empfangenen Daten unter Berücksichtigung von auf dem Endgerät befindlichen Daten und Algorithmen,
- Abbuchen von Wert- oder Geldeinheiten von einem in einem Speicher des Endgeräts gespeicherten vorbezahlten Guthaben in Abhängigkeit von dem Ergebnis der Weiterverarbeitung,
- wobei eine Anzeige eines verbleibenden Guthabens auf einem Display des Endgerätes erfolgt,
**dadurch gekennzeichnet, dass**
- mit dem vom Sender gesendeten Datentelegramm ein Zählerstand und eine Fahrzeugidentifikation des Transportmittels übermittelt werden, wobei der Zählerstand nur inkrementiert wird, wenn das Fahrzeug fährt,
- aufgrund einer Veränderung des Zählerstandes die Abbuchung von Wert- oder Geldeinheiten erfolgt, und
- die Wert- oder Geldeinheiten nur abgebucht werden, wenn die Veränderung des Zählerstandes einen festgelegten Schwellenwert überschreitet.

2. Verfahren nach Anspruch 1, **dadurch gekennzeichnet, dass** die Datentelegramme mindestens eine Information aus der Menge Firmen-ID, Sequenznummer, Datum oder Uhrzeit enthalten.

3. Verfahren nach Anspruch 1, **dadurch gekennzeichnet, dass** an einer jeden Haltestelle eine Information über die Fahrtrichtung in das Datentelegramm eingefügt wird.

4. Verfahren nach einem der vorangegangenen Ansprüche, **dadurch gekennzeichnet, dass** das Nutzerendgerät aus den empfangenen Datentelegrammen Datensätze über den Fahrtanfang und/oder das Fahrtende generiert und speichert.

5. Verfahren nach einem der vorangegangenen Ansprüche, **dadurch gekennzeichnet, dass** das Nutzerendgerät den aktuellen Ticketstatus anzeigt.

## Claims

1. A method for automatically recording the use of fee-based transport means for the passenger transport and for billing the fare, wherein at least one transmitter located in the area of the transport means emits data telegrams in a unidirectional manner, which data telegrams will be received and processed by a terminal of the user who uses the transport means, wherein the following steps are realized
- receiving and storing a data telegram emitted by a transmitter, which data telegram contains a location information item with respect to the location of the transmitter and/or fare or tariff information,
- receiving and storing at least one other data telegram emitted by a transmitter,
- processing the received data in consideration of data and algorithms present on the terminal
- debiting value or monetary units from a prepaid credit, that has been stored in a storage of the terminal, in dependence on the result of the processing,
- wherein a remaining credit will be displayed on the display of the terminal,
**characterized in that**
- a count and a vehicle identification of the transport means will be transmitted with the data telegram emitted by the transmitter, wherein the count will only be incremented, if the vehicle is running,
- due to the change of the count the value and monetary units will be debited, and
- the value and monetary units will only be debited, if the change of the count exceeds a fixed threshold value.

2. A method according to claim 1, **characterized in that** the data telegrams contain at least one information item of the group of company ID, sequence number, date or time.

3. A method according to claim 1, **characterized in that** an information item about the driving direction will be included in the data telegram at each stop.

4. A method according to one of the preceding claims, **characterized in that** the user terminal will generate and store data sets about the trip start and/or the trip end on the base of the received data telegrams.

5. A method according to one of the preceding claims, **characterized in that** the user terminal will display the current ticket status.

## Revendications

1. Procédé de détection automatique de l'utilisation de moyens de transport payants destinés au transport de personnes et de facturation du prix du trajet, dans lequel au moins un émetteur disposé dans la zone du moyen de transport émet des télégrammes de données de manière unidirectionnelle, lesquels télégrammes de données sont reçus et traités par un terminal de l'utilisateur, qui utilise le moyen de transport, les étapes suivantes étant réalisées
- recevoir et stocker un télégramme de données émis par un émetteur, lequel télégramme de données contient une information de site par rapport à l'emplacement de l'émetteur et/ou des informations de prix de billet ou de tarifs,
- recevoir et stocker au moins un autre télégramme de données émis par un émetteur,
- traiter les données reçues en tenant compte de données et d'algorithmes, qui sont présents dans le terminal,
- débiter des unités de valeur ou des unités monétaires d'un crédit prépayé et stocké dans une mémoire du terminal en fonction du résultat du traitement,
- dans lequel un crédit restant sera affiché sur un écran du terminal,
**caractérisé en ce que**
- une valeur de compteur et une identification de véhicule seront transmises ensemble avec le télégramme de données émis par l'émetteur, dans lequel la valeur de compteur ne sera incrémentée que si le véhicule roule,
- le prélèvement d'unités de valeur ou d'unités monétaires se fait sur la base d'un changement du compteur, et
- les unités de valeur ou les unités monétaires ne seront débités que si le changement du compteur excède une valeur de seuil fixée.

2. Procédé selon la revendication 1, **caractérisé en ce que** les télégrammes de données contiennent au moins une information du groupe de ID entreprise, de numéro de séquence, de date ou d'heure.

3. Procédé selon la revendication 1, **caractérisé en ce qu'**une information sur le sens du déplacement est jointe au télégramme de données à chaque arrêt.

4. Procédé selon l'une des revendications précédentes, **caractérisé en ce que** le terminal d'utilisateur génère et mémorise des jeux de données par rapport au début du trajet et/ou par rapport à la fin du trajet sur la base des télégrammes de données reçus.

5. Procédé selon l'une des revendications précédentes, **caractérisé en ce que** le terminal d'utilisateur affiche le statut de billet actuel.
